# EUROPÄISCHE PATENTSCHRIFT

(11) **EP 0 445 172 B1**
(45) Veröffentlichungstag und Bekanntmachung des Hinweises auf die Patenterteilung: **04.08.1993**
(21) Anmeldenummer: 89913051.2
(22) Anmeldetag: 27.11.1989
(51) Int. Cl.: A21B 1/42, A21B 7/00

(54) **ANLAGE ZUR BEHANDLUNG VON BACKGUT**
TREATMENT PLANT FOR BAKERY
INSTALLATION POUR LE TRAITEMENT DE PRODUITS DE BOULANGERIE

(30) Priorität: 28.11.1988 AT 2926/88
(43) Veröffentlichungstag der Anmeldung: 11.09.1991
(73) Patentinhaber: König, Elisabeth, A-8045 Graz (AT)
(72) Erfinder: König, Elisabeth, A-8045 Graz (AT)
(74) Vertreter: Wildhack, Helmut, Dipl.-Ing. Dr.
(86) Internationale Anmeldenummer: AT8900111
(87) Internationale Veröffentlichungsnummer: WO9006057

(56) Entgegenhaltungen:
- EP-A- 0 099 510
- WO-A-88/08669
- DE-A- 3 212 877
- FR-A- 2 530 926
- GB-A- 700 976
- US-A- 2 897 772

## Beschreibung

### Anlage zur Behandlung von Backgut

Die Erfindung bezieht sich auf eine Anlage zur Behandlung von Backgut mit einem zumindest einen Behandlungsraum für das Backgut bildenden Backofen mit einem wärmeisolierten Backraum, durch welchen zumindest eine erste Fördervorrichtung das Backgut tragende, in einem Stapel aufeinanderliegende Auflagen vertikal nach oben transportiert, wo die Auflagen im Backraum durch eine Übergabeeinrichtung der Reihe nach an zumindest eine zweite Fördervorrichtung übergeben werden, welche die im Stapel aufeinanderliegenden Auflagen im Backraum wieder nach unten transportiert, wobei jede Fördervorrichtung eine auf den jeweiligen Stapel einwirkende, eine schrittweise Auf- bzw. Abwärtsbewegung der Auflagen bewirkende Hub- bzw. Absenkeinrichtung hat, der Fixierorgane zugeordnet sind, die den Stapel während eines Teiles dieser Bewegung halten, und wobei unterhalb der Stapel ein horizontaler, in beiden Richtungen bewegbarer Förderer vorgesehen ist, auf den das von den Auflagen getragene Backgut an einer außerhalb des Behandlungsraumes angeordneten Station auflegbar bzw. vom Förderer abnehmbar ist, und mit welchem Förderer die Auflagen durch zwei an einander entgegengesetzten Wänden des Backofens angeordnete Öffnungen in den Backofen ein- bzw. aus diesem ausgebracht werden können.

Backöfen für eine Anlage der oben beschriebenen Art sind bekannt (DE-PS 570 527, DE-PS 549 132, AT-PS 376 106, DE-OS 3 330 693). Eine mit einem solchen Backofen versehene Anlage ist Gegenstand eines älteren Vorschlages des Anmelders und hat den Vorteil einer gedrängten Bauweise, welche sich auf unterschiedliche Weise betreiben läßt: Bei händischem Betrieb werden die mit dem Backgut belegten Auflagen an derselben Stelle auf den Förderer aufgelegt, an welche Stelle der Förderer das fertig ausgebackene Backgut zurückbringt. Ein- und Ausbringung des Backgutes in den Backraum erfolgt hiebei durch dieselbe Öffnung des Backofens. Bei kontinuierlichem, industriellem Betrieb ist es jedoch in der Regel günstiger, die Einbringung des auszubackenden Backgutes in den Backofen an der einen Seite desselben vorzunehmen und die Ausbringung des fertig ausgebackenen Backgutes an der anderen Seite des Backofens, so daß ein durchlaufender Betrieb des Backofens entsteht. In beiden Fällen muß jedoch das Backgut vor seiner Einbringung in den Backofen bzw. nach Durchlauf des Backofens händisch oder maschinell verlagert werden, um die dem eigentlichen Backprozeß vorgeschalteten bzw. nachgeschalteten Arbeitsvorgängedurchzuführen, z.B. eine Gärung oder Formung der Teigstücke vor dem Backprozeß bzw. eine Kühlung des Backgutes nach dem Backprozeß vor der Verpackung des Backgutes. Diese Verlagerung des Backgutes erfordert, wenn sie händisch durchgeführt wird, einen erheblichen Zeit- und Arbeitsaufwand. Wird die erwähnte Verlagerung des Backgutes maschinell durchgeführt, so ist der hiefür nötige maschinelle Aufwand beträchtlich und die zur Durchführung der nötigen Arbeitsgänge dienenden Vorrichtungen benötigen verhältnismäßig viel Platz. Eine komplett automatisch arbeitende Anlage ist daher teuer und erfordert in der Backstube einen erheblichen Platzbedarf, der nicht immer und überall zur Verfügung steht.

Die Erfindung setzt sich zur Aufgabe, eine Anlage der eingangs geschilderten Art so weiterzuentwickeln, daß die Anlage vielseitig betreibbar wird, wobei dennoch der Platzbedarf äußerst gering ist. Die Erfindung löst diese Aufgabe dadurch, daß anschließend an den Backofen zumindest ein weiterer, von einem gesonderten wärmeisolierten Gehäuse umschlossener, vom Behandlungsraum des Backofens unterschiedlicher Behandlungsraum für das Backgut vorhanden ist, z.B. zumindest ein Gärschrank und bzw. oder zumindest ein Kühlturm und bzw. oder zumindest ein Backofen, gegebenenfalls mit unterschiedlicher Backatmosphäre, wobei alle Behandlungsräume mit gleichartigen, die Auflagen in Stapeln aufwärts bzw. abwärts bewegenden Fördervorrichtungen versehen sind, daß der Förderer für alle Behandlungsräume gemeinsam ist und sich unterhalb der Reihe aller Behandlungsräume erstreckt und daß eine programmierbare Steuerung für den Transport der Auflagen auf diesem Förderer zum jeweils gewünschten Behandlungsraum vorhanden ist. Auf diese Weise wird die Anlage in äußerst vielseitiger Weise automatisch betreibbar. Beispielsweise können die mit portionierten und geformten Teigstücken belegten Auflagen in einen Gärraum eingebracht und danach dem diesem Gärraum benachbarten Backofen auf denselben Auflagen zugeführt werden. Diesem Backofen kann ein einen Kühlraum bildender Kühlturm nachgeschaltet sein, wenn eine Auskühlung des Backgutes (z.B. durch Bestreichen mit kühler Luft) oder gegebenenfalls sogar eine Intensivkühlung, etwa eine Tiefkühlung, erforderlich ist, bevor das Backgut verpackt wird. Das Backgut verbleibt während dieser Behandlungsvorgänge stets auf denselben Auflagen, braucht also nicht umgeladen zu werden, und diese Auflagen werden vom programmgesteuerten horizontalen Förderer auf kürzestem Wege jeweils zu demjenigen Behandlungsraum transportiert, an welchem der jeweils nächste Behandlungsschritt durchgeführt werden soll. Geeignete Programmsteuerungen sind bekannt, so daß die Auslegung entsprechender Steuerungen problemlos möglich ist. Vorteilhaft ist auch, daß die in den einzelnen Behandlungsräumen angeordneten, die Auflagen auf und ab transportierenden Fördervorrichtungen einander gleich bzw. zumindest einander ähnlich sind (beispielsweise können - ohne das Prinzip der Fördervorrichtung zu verändern - die Höhen der einzelnen Behandlungsräume voneinander abweichen), so daß nicht nur ein einheitliches Transportsystem in jedem Behandlungsraum zur Verfügung steht, sondern auch die Anlagekosten im Vergleich zu einer Anlage mit unterschiedlichen Transportsystemen reduziert werden.

In zwei einander - in Durchlaufrichtung des Backgutes gesehen - hintereinandergeschalteten Backräumen kann im ersten Backraum ein Anbacken des Backgutes und im zweiten Backraum ein Fertigbacken erfolgen. In zwei einander folgenden Gärräumen kann eine Vorgärung und eine Nachgärung des Backgutes durchgeführt werden.

Selbstverständlich müssen die erwähnten weiteren Behandlungsräume (Gärräume, Kühlräume, Backräume) nicht stets alle vorhanden sein, vielmehr wird die Anlage stets auf die jeweils vorliegenden Bedürfnisse abzustimmen sein. Eine spätere Erweiterung bzw. Änderung ist jedoch mit geringem Aufwand möglich, da die neu einzusetzenden Anlageteile lediglich eingefügt und der horizontale, unter den Behandlungsräumen verlaufende Förderer auf die neue Länge abgestimmt und die Programmierung seiner Steuerung auf die neuen Gegebenheiten abgestimmt werden müssen.

In allen fällen ergibt sich eine erhebliche Platzeinsparung dadurch, daß die einzelnen Behandlungsräume einander eng benachbart angeordnet werden können, wenn zwischen den einzelnen Behandlungsräumen keine weiteren Behandlungen des Backgutes, sei es eine Auflegung auf den Förderer oder eine Abnahme von demselben, sei es eine Formung des Backgutes zwischen Vorgärung und Nachgärung, usw. erforderlich sind. In solchen Fällen können die für diese Einwirkungen auf das Backgut nötigen Stationen problemlos zwischen einzelnen der Behandlungsräume angeordnet werden, ohne das Arbeitsprinzip der erfindungsgemäßen Anlage verlassen zu müssen.

Vorteilhaft ist weiters, daß der Betrieb der Anlage von beiden Seiten her möglich ist, also von beiden Stirnenden des horizontalen Förderers, gegebenenfalls auch von der Mitte der Anlage her. Es kann also der Beschickungsort der Anlage ebenso frei gewählt werden wie der Ort der Abnahme der fertig gebackenen Teigstücke, ebenso wie es später möglich ist, Beschickungsort bzw. Abnahmeort zu ändern, wenn nur die Programmierung entsprechend eingerichtet wird. Dadurch läßt sich die Anlage in optimaler Weise an die in der Backstube jeweils vorhandenen Bedingungen anpassen. In der Regel wird jedoch die Beschickung der Anlage vom einen Stirnende derselben her erfolgen, wo auch die Abnahme erfolgt, wenn nicht auf einen durchlaufenden Betrieb Wert gelegt wird, in welchem fall dann die Abnahme am anderen Stirnende der Anlage erfolgt. In diesen Fällen ist es gemäß einer Weiterbildung der Erfindung zweckmäßig, den Förderer über den jeweils ersten bzw. letzten Behandlungsraum der Behandlungsraumreihe hinaus mit einer Verlängerung zu versehen, um die Beschickungs- bzw. Abnahmestation zweckentsprechend anordnen zu können.

Aus der AT-PS 346 267 ist es bekannt, einer Reihe nebeneinander angeordneter Etagenbacköfen volle Beschickungsvorrichtungen mittels eines Förderbandes zuzuführen und die leeren Beschickungsvorrichtungen mittels eines weiteren Förderbandes von den Etagenbacköfen wegzubefördern. Die beiden Förderbänder liegen jeweils in Abstand vor der Reihe der Etagenbacköfen, so daß solche Förderbänder nicht im Sinne der Erfindung einsetzbar sind. Außerdem bewegen sich die Förderbänder bei dieser bekannten Anlage stets in der gleichen Richtung, wogegen beim Erfindungsgegenstand ein eigenes Förderband in beiden Richtungen bewegt wird und sowohl den Zutransport als auch den Abtransport der das Backgut tragenden Auflagen besorgt.

Gemäß einer Weiterbildung der Erfindung können für das Backen von Kastenbrot die Auflagen von Kästen gebildet sein, wobei an zumindest einer der beiden Stationen eine Vorrichtung zum Aufsetzen bzw. Abnehmen von den Kästen zugeordneten Deckeln vorhanden ist.

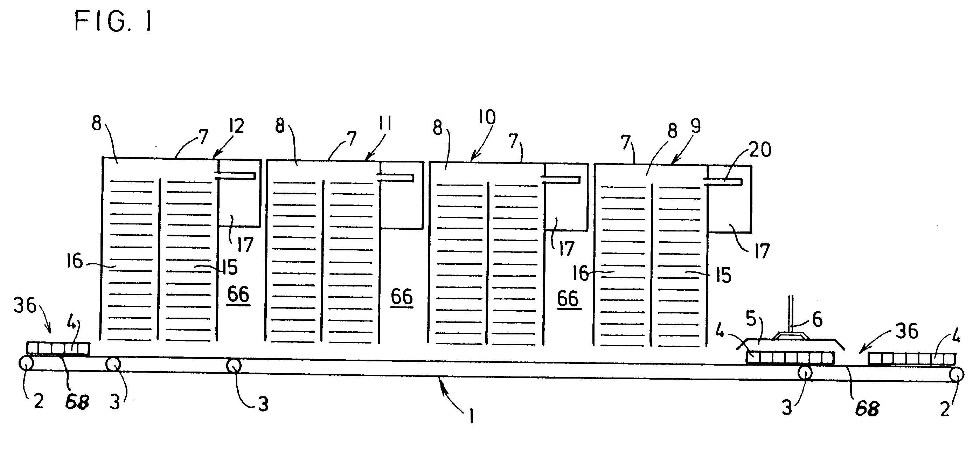

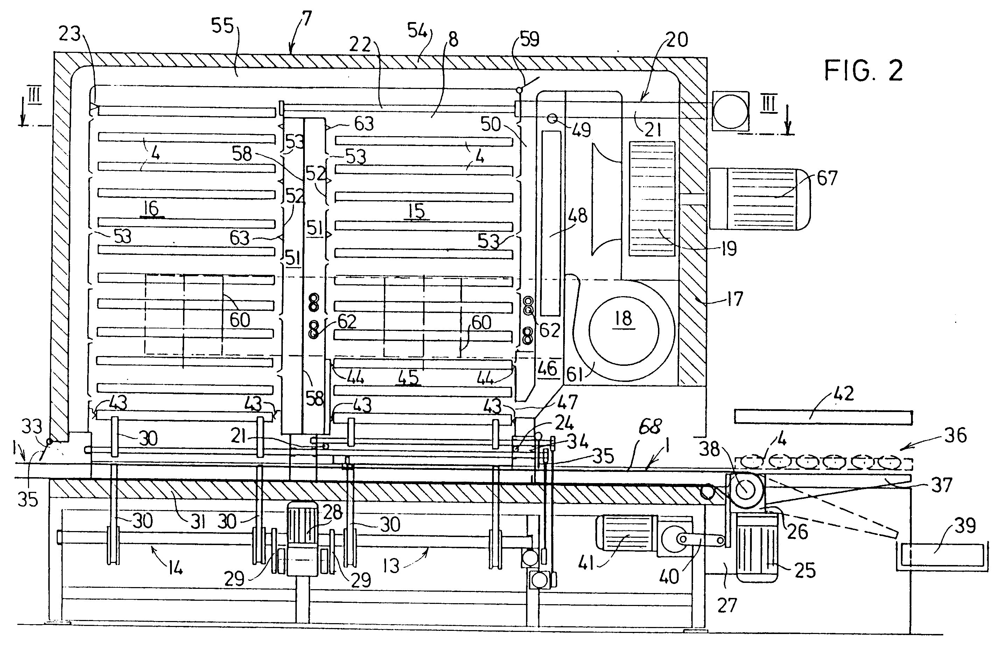

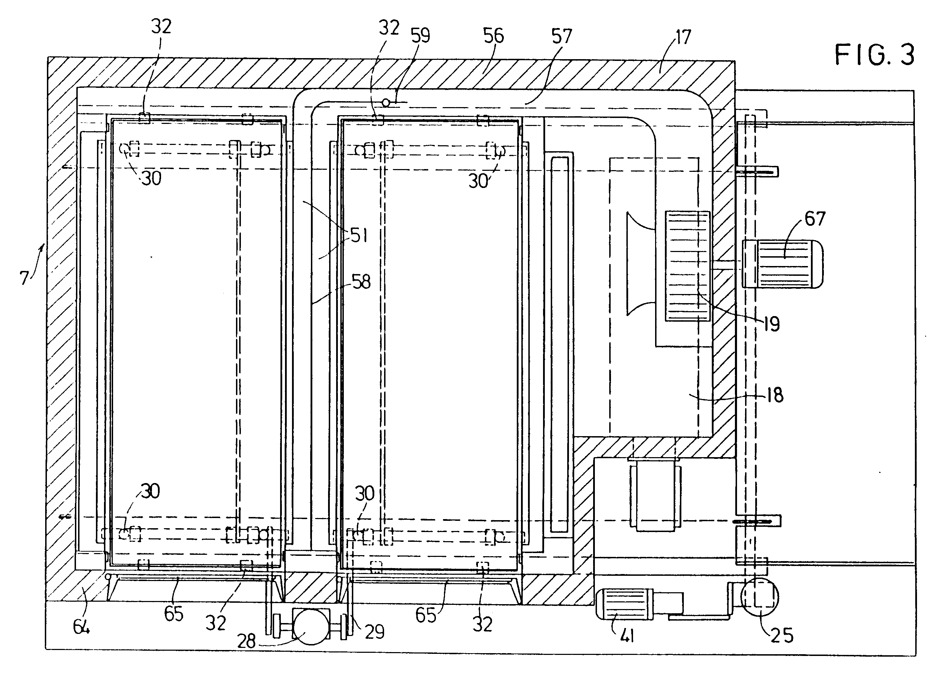

In der Zeichnung sind Ausführungsbeispiele des Erfindungsgegenstandes schematisch dargestellt. Fig.1 zeigt eine mit einem Backofen, zwei Gärräumen und einem Kühlturm versehene Anlage im Prinzipschema, Fig.2 zeigt das in Fig.1 rechts liegende Ende der Anlage (Backofen mit Beschickungsstation) im Vertikalschnitt und in größerem Maßstab. Fig.3 ist ein Horizontalschnitt nach der Linie III - III der Fig.2.

Die Anlage nach Fig.1 hat einen horizontal angeordneten Förderer 1, der von endlosen Förderketten gebildet ist, die an den beiden Stirnenden des Förderers 1 über Umlenkräder 2 geführt sind. Über die Länge des Förderers 1 verteilt sind eine Mehrzahl von Stützrollen 3 im nicht dargestellten Gestell der Anlage vorgesehen, um einen Durchhang des Förderers 1 zu vermeiden. Der Förderer 1 transportiert Auflagen 4 für das Backgut, welche in Fig.1 als Kästen zur Ausbackung von Kastenbrot dargestellt sind. Diese Auflagen 4 können durch Deckel 5 abdeckbar sein, welche durch Saugvorrichtungen 6, z.B. Saugnäpfe, aufgesetzt bzw. abgenommen werden können. Oberhalb des Förderers 1 sind in zweckmäßig wärmeisolierten, Gehäusen 7 mehrere Behandlungsräume 8 für voneinander unterschiedliche Behandlungen des Backgutes angeordnet. Der in Fig.1 äußerste rechte Behandlungsraum 8 ist von einem Backofen 9 gebildet, an den sich zwei Gärschränke 10,11 und ein Kühlturm 12 der Reihe nach anschließen. Für jeden Behandlungsraum 8 sind zwei Fördervorrichtungen 13,14 (Fig.2) vorgesehen, von denen die Fördervorrichtung 13 die in einem Stapel 15 aufeinanderliegenden Auflagen 4 im jeweiligen Behandlungsraum 8 aufwärts transportiert, wogegen die Fördervorrichtung 14 die im Behandlungsraum 8 in einem benachbarten Stapel 16 aufeinanderliegenden Auflagen 4 abwärts transportiert, wobei diese beiden Bewegungen zweckmäßig schrittweise erfolgen. Konstruktion und Funktion dieser Fördervorrichtungen 13,14 werden später noch näher beschrieben. In einem an das Gehäuse 7 angesetzten Kasten 17 sind Einrichtungen zur Erzeugung eines bestimmten Klimas im jeweiligen Behandlungsraum 8 vorgesehen, z.B. im Falle des Backofens 9 eine Heizung 18 und ein Gebläse 19. Ferner nimmt dieser Kasten 17 eine Übergabeeinrichtung 20 auf, welche die Auflagen 4 der Reihe nach vom oberen Ende des aufwärtsbewegten Stapels 15 an das obere Ende des abwärtsbewegten Stapels 16 übergibt. Diese Übergabeeinrichtung 20 kann z.B. von einem pneumatischen Zylinder 21 (Fig.2) gebildet sein, dessen Kolbenstange 22 die erwähnte Verschiebebewegung der Auflagen 4 bewirkt. Ein Endschalter 23 (Fig.2) fühlt ab, daß bei der Verschiebebewegung die Platte 4 die richtige Endlage erreicht hat und gibt die Abwärtsbewegung des Stapels 16 nur dann frei, wenn diese Endlage erreicht ist. In analoger Weise sind Fühler 24 am unteren Ende des aufwärtstransportierten Stapels 15 vorgesehen, welche kontrollieren, ob die mittels des Förderers 1 unter den Stapel 15 zugeführte Auflage 4 die richtige Lage hat. Steht diese Auflage 4 nach vorne oder hinten (gesehen in Bewegungsrichtung des Förderers 1) vor, so wird einer der Fühler 24 betätigt und setzt den Antrieb für die Bewegung der Auflagen 4 still. Der Antrieb für den Förderer 1 hat einen Motor 25 (Fig.2), der zusammen mit einem Regelgetriebe 26 von einer nur schematisch angedeuteten programmierbaren Steuerung 27 so gesteuert wird, daß die Auflagen vom Förderer 1 jeder beliebigen vorgewählten Stellung in Bezug auf die verschiedenen Behandlungsräume 8 zugeführt werden können. Dadurch ist es möglich, die von den Auflagen getragenen Teigportionen jedweder gewünschten Behandlung zu unterziehen.

Um die Auflagen 4 in den Behandlungsräumen 8 auf- und abzutransportieren, ist für jeden Behandlungsraum 8 ein Motor 28 vorhanden, welcher die Fördervorrichtungen 13,14 betätigt. Hiezu wirkt der Motor 28 über ein Gestänge 29 mit Exzentern auf Hubstempel 30 ein, die in der Bodenplatte 31 des betreffenden Behandlungsraumes 8 in vertikaler Richtung beweglich geführt sind. Diese Hubstempel 30 untergreifen die vom Förderer 1 zugeführte Auflage 4, welche unterhalb des Stapels 15 liegt, im Bereiche ihrer vier Ecken und heben diese Auflage 4 in Anlage an die im Stapel 15 aufeinanderliegenden Auflagen an. Zugleich wird der gesamte Stapel 15 um die Höhe einer Auflage 4 angehoben. Beim Zurückgehen der Hubstempel 30 wird das Nachrutschen der im Stapel 15 befindlichen Auflagen 4 durch in die Seitenwand der untersten Auflage 4 einrastenden Sperrklinken 32 (Fig.3) verhindert. Nach Zurückgehen der Hubstempel 30 kann somit die nächste Auflage 4 in die Zufuhrposition unter dem Stapel 15 gebracht und durch die Hubstempel 30 nach oben gehoben werden, wobei diese Auflage 4 von unten unmittelbar an die darüberliegende Auflage 4 zur Anlage kommt. Auf diese Weise wird bei der Beschickung des Behandlungsraumes 8 in diesem ein Stapel unmittelbar aufeinanderliegender Auflagen 4 gebildet, welcher Vorgang so lange wiederholt wird, bis die oberste Auflage 4 dieses Stapels 15 in die Höhe der Übergabeeinrichtung 20 gelangt, von welcher sie zum benachbarten Abteil des Behandlungsraumes 8 verschoben wird, in welchem die Auflagen 4 im Stapel 16 nach unten transportiert werden. Zur Erleichterung dieser von der Übergabeeinrichtung 20 durchgeführten Verschiebebewegung können im Behandlungsraum 8 Führungsschienen für die vom rechts liegenden Abteil in das links liegende Abteil des Behandlungsraumes 8 zu übergebenden Auflagen 4 vorhanden sein. Im links liegenden Abteil des Behandlungsraumes 8 werden die Auflagen durch die Fördervorrichtung 14 schrittweise abwärts transportiert, welche Fördervorrichtung 14 in ihrer Bauweise im wesentlichen jener der Fördervorrichtung 13 gleicht. Auch für diese Bewegung sind von Sperrklinken 32 (Fig.3) gebildete Fixierorgane vorhanden, welche die Höhenlage der Auflagen schrittweise sichern. Die jeweils unterste Auflage 4 im links liegenden Abteil des Behandlungsraumes 8 gelangt aus diesem Abteil wieder Abteil auf den Förderer 1 und wird von diesem, je nach dem gewählten Programm, entweder wieder zum rechts liegenden Abteil des Behandlungsraumes 8 transportiert, wenn ein nochmaliger Durchlauf des Behandlungsraumes 8 für die Auflagen 4 gewünscht ist, oder es wird die Auflage 4 aus dem Behandlungsraum 8 durch eine Ausbringeöffnung 33 herausgeführt. Diese Ausbringeöffnung 33 kann, ebenso wie die Einbringeöffnung 34, durch eine Klappe 35 verschlossen sein, welche nur dann geöffnet wird, wenn eine Auflage 4 unmittelbar vor der jeweiligen Öffnung steht und durch diese ein- bzw. ausgebracht werden soll. Dadurch wird ein Austritt von Backraumatsmosphäre in die Backstube verhindert.

Die aus dem Backofen 9 ausgebrachte Auflage wird durch den Förderer 1 entsprechend dem durch die Steuerung 27 bestimmten Programm zum nächsten Behandlungsraum 8 (Fig.1) gebracht, etwa zu dem Kühlturm 12, wo das Backgut in geeigneter Weise abgekühlt wird.

Vor der Einbringeöffnung 34 und vor der Stirnwand des Kastens 17 befindet sich eine Station 36 für die Beladung bzw. Entladung der Auflagen 4. Zu diesem Zweck steht an dieser Stelle der Förderer 1 mit einer Verlängerung 68 entsprechend weit stirnseitig über den äußersten Behandlungsraum 8 vor. An dieser Station 36 kann eine Abkippvorrichtung 37 (Fig.2) vorgesehen sein, welche z.B. in Form einer um eine horizontale Achse 38 kippbaren Konsole ausgebildet sein kann, bei deren Abkippung das auf der jeweiligen Auflage 4 antransportierte, fertig behandelte Backgut auf ein querlaufendes Förderband 39 rutscht. Die dabei festgehaltene Auflage 4 wird nach Zurückkippen der Abkippvorrichtung 37 wieder bereit für die erneute Aufnahme von Backgut, das an der Station 1 händisch oder auch automatisch, etwa mittels eines, insbesondere quer zur Längsrichtung des Förderers 1 angeordneten, Abziehbandes 42 auf die Auflagen 4 aufgebracht werden kann. Die Kippachse 38 der Abkippvorrichtung 37 kann von der Achse der Umlenkräder 2 des Förderers 1 gebildet sein, die Betätigung der Abkippvorrichtung 37 erfolgt über einen Exzentertrieb 40 von einem Motor 41 aus, der ebenfalls von der Steuerung 27 gesteuert werden kann.

Eine weitere Be- bzw. Entladestation 36 ist am anderen Stirnende der Kette von Behandlungsräumen 8 vorgesehen (Fig.1), wo der Förderer 1 ebenfalls entsprechend weit über den letzten Behandlungraum 8 bzw. dessen Gehäuse 7 vorragt. Auf diese Weise ist es möglich, die Kette von Behandlungsräumen von beiden Stirnenden her nach Wahl zu beschicken bzw. zu entladen. Die beiden Stationen 36 können, aber müssen nicht, einander identisch ausgebildet sein. Weiters ist es möglich, wie Fig. 1 zeigt, die am einen Stirnende angeordnete Station 36 breiter auszubilden als die am anderen Stirnende des Förderers 1 angeordnete Station, etwa um Platz zu schaffen, für eine mit den Saugvorrichtungen 6 ausgebildete Aufsetz- bzw. Abnahmevorrichtung für die Deckel 5.

Die zur Auflegung des Backgutes auf den Förderer 1 dienende Station 36 und bzw. oder die zur Abnahme des fertiggebackenen Backgutes dienende Station 36 können jedoch auch in den Zwischenräumen 66 zwischen einander benachbarten Gehäusen 7 zweier Behandlungsräume 8 angeordnet werden. Wenn die Kästen 17, wie dies Fig.1 zeigt, seitlich an das jeweilige Gehäuse 7 angesetzt sind, so entsteht ein solcher Zwischenraum 66 von selbst, andernfalls kann er zur Unterbringung der Station 36 durch Auseinanderrückung zweier benachbarter Gehäuse 7 gebildet bzw. vergrößert werden. Ebenso ist es möglich, in den Zwischenräumen 66 andersgeartete Stationen, z.B. Formstationen für die Teigstücke, anzuordnen. Die entsprechenden Bewegungen des Förderers 1 sind durch ein entsprechendes Programm der Steuerung 27 leicht zu erreichen.

In analoger Weise zu der an Hand Fig.2 beschriebenen Konstruktion sind Fördervorrichtungen 13,14 für die Auf- bzw. Abbewegung der Auflagen 4 in Stapeln 15,16 auch in den anderen Behandlungsräumen 8 (Fig.1) vorgesehen, wobei die beiden Fördervorrichtungen 13,14 jeweils synchron, jedoch relativ zueinander zeitverschoben arbeiten, und dementsprechend auch die den beiden Stapeln 15,16 zugeordneten Sperrklinken 32. Die Bewegung dieser Sperrklinken in die Bewegungsbahn der Auflagen 4 bzw. in die Sperrlage und die nachfolgende Zurückziehung zur Freigabe der Anhebe bzw. Absenkbewegung der Auflagen 4 erfolgt von einem nicht dargestellten Getriebemotor mittels Exzentertrieben, wobei dieser Getriebemotor mit dem Getriebemotor 28 für die Bewegung der Hubstempel 30 so synchronisiert ist, daß die Bewegung der Hubstempel 30 auf die Bewegung der Sperrklinken 32 abgestimmt ist bzw. umgekehrt.

Um zu vermeiden, daß aus dem Behandlungsraum 8 des Backofens 9 (Fig.2) Warmluft bei der Ein- bzw. Ausbringung der Auflagen 4 in die Backstube austritt, sind außer den Klappen 35 noch zusätzliche Abdichtungen 43 vorgesehen, welche rundum elastisch an den Rahmen der untersten Auflagen 4 des Stapels anliegen und z.B. von federnden Metallzungen oder von Gummistreifen gebildet sind. Weitere, höher angeordnete, analog ausgebildete, Abdichtungen 44 können bei jenem Stapel 15 vorgesehen sein, dessen Auflagen 4 sich nach oben bewegen. Zwischen den beiden Abdichtungen 43,44 dieses Stapels 15 wird dadurch ein dicht abgeschlossener Raum 45 gebildet, in welchem eine Dampfzuleitung 46 über eine Öffnung 47 mündet. Der in dieser Dampfzuleitung 46 strömende Dampf wird mittels eines Schwadenverdampfers 48 erzeugt, welcher von einer Sprühdüse 49 mit Wasser besprüht wird. In dem Raum 45 wird das Backgut zunächst nur mit Wasserdampf beaufschlagt, so daß das Teigstück die sogenannte Ofengare im Backofen 9 vollziehen kann, jedoch strömender Luft nicht ausgesetzt ist. Erst nach dem Weitertransport über die oberen Abdichtungen 44 gelangen die Teigstücke in den eigentlichen Backraum, in welchem die Teigstücke erstmals mittels eines Heißluftstromes erwärmt werden, der nicht in den Raum 45 gelangen kann. für diese Heißluftzufuhr dienen seitlich der beiden Stapel 15,16 angeordnete Luftzufuhrkanäle 50,51, von denen der Luftzufuhrkanal 51 von einer mittig zwischen den beiden Stapeln 15,16 liegenden Doppelwand 52 begrenzt ist, wogegen die Kanäle 50 außen liegen. Die Luftzufuhrkanäle 50,51 haben den beiden Stapeln 15,46 zugeordnete Luftzutrittsöffnungen 53 in Schlitzform, welche an den beiden Seiten jedes Stapels 15,16 relativ zueinander in Höhenrichtung jeweils um die Höhe einer Auflage 4 versetzt sind. Zweckmäßig ist der Querschnitt jeder dieser Luftdurchtrittsöffnungen 53 verstellbar. Diese gegeneinander versetzte Anordnung der Öffnungen 53 hat zur Folge, daß die Luft zwischen je zwei einander benachbarten Auflagen 4 immer in wechselnder Richtung zwischen die Auflagen eingeblasen wird, so daß eine gleichmäßige Beaufschlagung aller Teigstücke mit Warmluft erfolgt. Durch die Einstellung der Querschnittsgröße der Öffnungen 53 kann die Luftzufuhr an das jeweils zu behandelnde Backgut angepaßt werden. Die Warmluft strömt zu den beiden äußeren Luftzufuhrkanälen 50 über einen entlang der Deckwand 54 des Backofens 9 verlaufenden Luftkanal 55, welcher an die Druckseite eines Gebläses des durch einen Motor 67 angetriebenen Gebläses 19 angeschlossen ist, unter welchem die Heizung 18 liegt. Die Beschickung der beiden inneren, durch eine Mittelwand 58 voneinander getrennten Luftzufuhrkanäle 51 mit Warmluft erfolgt über einen entlang der einen Seitenwand 56 (Fig.3) des Backofens 9 verlaufenden Luftkanal 57, der ebenfalls an die Druckseite des Gebläses 19 angeschlossen ist. In den beiden Luftkanälen 55,57 liegen von schwenkbaren Klappen 59 (Fig.2,3) gebildete Verteilorgane zur Grobeinstellung der Verteilung der den beiden Luftzufuhrkanälen 50,51 zugeführten Luftmengen. Die Feineinstellung der aus den Luftdurchtrittsöffnungen 53 austretenden Luftmengen erfolgt mittels der erwähnten Querschnittsveränderung dieser Öffnungen.

Zur Absaugung der Luft aus den beiden Abteilen des Behandlungsraumes 8, welche die beiden Stapel 15,16 aufnehmen, dient je eine Absaugöffnung 60 (Fig.2), die in der Seitenwand 56 angeordnet ist. Die beiden Öffnungen 60 sind an einen gemeinsamen Luftabzugskanal 61 angeschlossen, der entlang der Seitenwand 56 des Backofens zur Heizung 18 bzw. zur Saugseite des Gebläses 19 führt.

Um entlang des Weges der Auflagen im Backofen 9 verschiedene Temperaturzonen realisieren zu können, sind vor einzelnen Luftdurchtrittsöffnungen 53 elektrische Zusatzheizkörper 62 angeordnet, die nach Bedarf zugeschaltet werden.

An den beiden Wänden 52 können Sprühdüsen 63 angeordnet sein, mit welchen die auf den Auflagen 4 liegenden Teigstücke mit einer Flüssigkeit, insbesondere Wasser, besprüht werden können, wenn dies gewünscht ist.

An der der Seitenwand 56 gegenüberliegenden Seitenwand 64 des Gehäuses 7 sind Türen 65 vorgesehen (Fig.3), durch welche die die Stapel 15,16 der Auflagen 4 aufnehmenden Abteile des Behandlungsraumes 8 zugänglich sind.

Bei den anderen Behandlungsräumen 8, wie den beiden Gärschränken 10,11 und dem Kühlturm 12 (Fig.1), ist der Aufbau im Gehäuse 7 des jeweiligen Behandlungsraumes 8 ähnlich, d.h. auch dort sind zwei nebeneinander angeordnete Fördervorrichtungen 13, 14 vorgesehen, von denen jede im Behandlungsraum 8 einen Stapel 15,16 aufeinanderliegender Auflagen 4 nach oben bzw. nach unten bewegt. Auch Anordnung und Aufbau der Übergabeeinrichtung 20 ist derselbe wie bei Fig.2. Lediglich die klimatischen Bedingungen im jeweiligen Behandlungsraum 8 weichen ab. So sind bei den beiden Gärschränken 10,11 an sich bekannte Einrichtungen innerhalb des Gehäuses 7 vorgesehen, mit welchen im jeweiligen Gärschrank das jeweils gewünschte Klima aufrechterhalten wird. Selbstverständlich muß die Anlage nicht zwei Gärschränke enthalten, wenn dies für die jeweils vorliegenden Gegebenheiten nicht erforderlich ist. Zwei Gärschränke werden vielmehr dann vorgesehen, wenn entweder sehr lange Gärzeiten für die Teigstücke gewünscht sind und diese mit einem einzigen Gärschrank (gegebenenfalls in mehreren Umläufen) nicht erzielbar sind, oder wenn unterschiedliche Gärzeiten für die Teigstücke gewünscht sind, die sich ebenfalls mit einem einzigen Gärschrank nicht bewältigen lassen, oder wenn unterschiedliche klimatische Bedingungen für zwei Gärvorgänge gewünscht sind, z.B. für eine Vorgärung und eine Nachgärung (bezogen auf eine auf die Teigstücke einwirkende Formung, z.B. eine Stüpfelung der Teigstücke). Ebenso kann gegebenenfalls auch mehr als ein einziger Kühlturm 12 vorgesehen sein, um sich an unterschiedliche Kühlbedingungen besser anpassen zu können.

Wie Fig.1 zeigt, sind die Gehäuse 7 bzw. die an sie angesetzten Kasten 17 einander eng benachbart angeordnet, um die gesamte Baulänge der Anlage möglichst kurz zu halten. Davon wird nur dann abgegangen, wenn zwischen einzelnen, den diversen Behandlungsräumen 8 zugeordneten, auf die Teigstücke einwirkenden Vorgängen weitere solche Vorgänge erforderlich sind, die nicht in Behandlungsräumen 8 durchgeführt werden, z.B. eine Formung der Teigstücke (Langrollen, Stüpfelung, Einschneidung usw.) und wenn für die hiefür erforderlichen Maschinen die zwischen einander benachbarten Gehäusen 7 unterhalb der Kästen 17 verbleibenden Zwischenräume 66 (Fig.1) nicht genügend Platz bieten.

Eine beispielsweise Arbeitsweise einer solchen Anlage kann wie folgt sein: Die von Backplatten gebildete Auflagen 4 werden an der in Fig.1 rechts liegenden Station 36 belegt und anschließend vom Förderer 1 in den Backofen 9 eingebracht, dort im Behandlungsraum 8 im Stapel 15 nach oben geführt, von der Übergabeeinrichtung 20 sodann an den Stapel 16 übergeben und in diesem wieder zum Förderer 1 zurückgebracht, der die Auflagen der Reihe nach wieder übernimmt und wieder zurück zur in Fig.1 rechts liegenden Station 36 bringt, wo die mit den fertiggebackenen Teigstücken versehenen Auflagen abgenommen oder die Teigstücke von den Auflagen mittels der Abkippvorrichtung 37 auf das Förderband 39 abgelegt werden.

Eine andere Betriebsvariante besteht darin, die Auflagen bei der in Fig.1 rechts liegenden Station 36 zu belegen, sodann die Auflagen 4 mittels des Förderers 1 in den Stapel 15 einzubringen, an den Stapel 16 zu übergeben und schließlich mittels des Förderers 1 zur in Fig.1 links liegenden Station 36 zu bringen, wo die Backware von den Auflagen 4 abgenommen bzw. abgekippt oder auf sonstige Weise entfernt wird. Die leeren Auflagen werden sodann vom Förderer 1 wieder zurück zur in Fig.1 rechts liegenden Station 36 gebracht und dort neu belegt.

Wird von dem Backprozeß eine Gärung der Teigstücke an der Anlage gewünscht, so werden die Auflagen 4, bevor sie dem Stapel 15 des Backofens 9 zugeführt werden, durch einen Gärschrank bzw. durch beide Gärschränke 10,11 geführt.

Es ist zweckmäßig, die in Fig.1 dargestellte Anlage so zu benutzen, daß die in Fig.1 rechts liegende Station 36 für maschinelle Beschickung der Auflagen 4 dient, wogegen die Beschickung an der in Fig.1 links liegenden Station 36 händisch erfolgt. Beispielsweise können die Auflagen 4 von letzterer Station 36 zunächst in den Gärschrank 10 zu dessen Stapel 15 geführt werden, von wo die Auflagen nach Durchlaufen des Behandlungsraumes 8 des Gärschrankes 10 von dessen Stapel 16 wieder an den Förderer 1 übergeben und dann dem Backofen 9 zugeführt werden, dessen Durchlauf wie früher beschrieben erfolgt. Die Ausgabe der fertiggebackenen Teigstücke erfolgt wieder an der in Fig.1 links liegenden Station 36.

für die Herstellung von Kastenbrot kann so vorgegangen werden, daß die Beschickung der Anlage mit den mit den Teigportionen belegten Backkästen an der in Fig.1 links liegenden Station 36 erfolgt. Die Backkästen werden dann vom Förderer 1 zur in Fig.2 rechts liegenden Station 36 transportiert, wo mittels der Saugvorrichtung 6 die Deckel 5 auf die Backkästen aufgesetzt werden. Danach werden die mit den Deckeln verschlossenen Backkästen vom Förderer 1 zu einem der Gärschränke 10,11 geführt, und zwar zu dessen aufwärtsgehenden Stapel 15, sobald die Backkästen den Gärschrank durchlaufen haben, werden sie vom Förderer 1 zum Backofen 9 gebracht und nach dessen Durchlauf wieder zur Station 36 zurückgebracht, wo mittels der Saugvorrichtung 6 der Deckel 5 von jedem Backkasten wieder abgenommen wird. Die deckellosen Auflagen 4 werden sodann an der Station 36 von der Saugvorrichtung 6 zur Abkippvorrichtung 37 (Fig.2) gebracht, wo ohne Betätigung der Abkippvorrichtung die gebackenen Kastenbrote aus den Kästen (Auflagen 4) entladen werden. Die leeren Backkästen werden vom Förderer 1 in den Kühlturm 12 geführt und durch dessen Behandlungsraum 8 hindurchgeführt. Nach Durchlaufen des Kühlturmes 12 werden die leeren Auflagen wieder zurück auf die in Fig.1 links liegende Station 36 gebracht und dort neu belegt, worauf der Zyklus erneut beginnt.

Durch geeignete Wahl der Programmierung der Steuerung 27, von welcher der Transport der Auflagen 4 am Förderer 1 und durch die Behandlungsräume 8 gesteuert wird, ist es möglich, sehr rasche Taktzeiten zu erreichen, so daß die Leistungsfähigkeit der Anlage im Vergleich zu bekannten Anlagen wesentlich gesteigert wird. Außerdem ergibt sich im Vergleich zu bekannten Anlagen eine wesentliche Reduzierung des Platzbedarfes und eine Reduzierung der Belastung der Backstube mit Anteilen der aus den Gehäusen 7 austretenden Atmosphären (Dampf, Heißluft usw.). Letzterer Vorteil wird durch die eine Schleuse bildenden Abdichtungen 43,44 im Zusammenwirken mit den Klappen 35 erzielt und kann noch weiter dadurch gesteigert werden, daß gegebenenfalls die Gehäuse 7 aneinander anliegen, so daß die Ausbringeöffnung 33 des einen Gehäuses 7 zugleich die Eintrittsöffnung 34 des benachbarten Gehäuses ist bzw. umgekehrt.

Es sind zahlreiche Varianten der beschriebenen Anlage möglich. Beispielsweise können in einem oder mehreren der Behandlungsräume 8 mehr als je ein auf- und abgehender Stapel 15,16 vorgesehen sein, insbesondere dann, wenn auf lange Behandlungszeiten Wert gelegt wird (z.B. in Gärschränken).

## Patentansprüche

1. Anlage zur Behandlung von Backgut mit einem zumindest einen Behandlungsraum (8) für das Backgut bildenden Backofen (9) mit einem wärmeisolierten Backraum, durch welchen zumindest eine erste Fördervorrichtung (13) das Backgut tragende, in einem Stapel (15) aufeinanderliegende Auflagen (4) vertikal nach oben transportiert, wo die Auflagen (4) im Backraum durch eine Übergabeeinrichtung (20) der Reihe nach an zumindest eine zweite Fördervorrichtung (14) übergeben werden, welche die im Stapel (16) aufeinanderliegenden Auflagen (4) im Backraum wieder nach unten transportiert, wobei jede Fördervorrichtung (13,14) eine auf den jeweiligen Stapel (15,16) einwirkende, eine schrittweise Auf- bzw. Abwärtsbewegung der Auflagen (4) bewirkende Hub- bzw . Absenkeinrichtung hat, der Fixierorgane zugeordnet sind, die den Stapel (15,16) während eines Teiles dieser Bewegung halten, und wobei unterhalb der Stapel (15,16) ein horizontaler, in beiden Richtungen bewegbarer Förderer (1) vorgesehen ist, auf den das von den Auflagen getragene Backgut an einer außerhalb des Behandlungsraumes (8) angeordneten Station auflegbar bzw. vom Förderer (1) abnehmbar ist, und mit welchem Förderer (1) die Auflagen (4) durch zwei an einander entgegengesetzten Wänden des Backofens (9) angeordnete Öffnungen (33,34) in den Backofen (9) ein- bzw. aus diesem ausgebracht werden können, dadurch gekennzeichnet, daß anschließend an den Backofen (9) zumindest ein weiterer, von einem gesonderten wärmeisolierten Gehäuse (7) umschlossener, vom Behandlungsraum (6) des Backofens (9) unterschiedlicher Behandlungsraum (8) für das Backgut vorhanden ist, z.B. zumindest ein Gärschrank (10,11) und bzw. oder zumindest ein Kühlturm (12) und bzw. oder zumindest ein Backofen (9), gegebenenfalls mit unterschiedlicher Backatmosphäre, wobei alle Behandlungsräume (8) mit gleichartigen, die Auflagen (4) in Stapeln (15,16) aufwärts bzw. abwärts bewegenden Fördervorrichtungen (13 bzw.14) versehen sind, daß der Förderer (1) für alle Behandlungsräume (8) gemeinsam ist und sich unterhalb der Reihe aller Behandlungsräume (6) erstreckt, und daß eine programmierbare Steuerung (27) für den Transport der Auflagen (4) auf diesem Förderer (1) zum jeweils gewünschten Behandlungsraum (8) vorhanden ist.

2. Anlage nach Anspruch 1, dadurch gekennzeichnet, daß sich der Förderer (1) mit Verlängerungen (68) an den Enden der Kette von Behandlungsräumen (8) über den jeweils ersten und letzten Behandlungsraum (8) hinaus erstreckt.

3. Anlage nach Anspruch 1 oder 2, dadurch gekennzeichnet, daß zumindest eine Station (36) zur Aufbringung bzw. Abnahme des Backgutes und bzw. oder zur Behandlung desselben zwischen einzelnen der Behandlungsräume (8) und bzw. oder im Bereich der Verlängerungen (68) oberhalb des Förderers (1) angeordnet ist.

4. Anlage nach Anspruch 1, 2 oder 3, dadurch gekennzeichnet, daß die Auflagen (4) von Kästen gebildet sind, und daß an zumindest einer Station (36) eine Vorrichtung zum Aufsetzen bzw. Abnehmen von den Kästen zugeordneten Deckeln (5) vorhanden ist.

5. Anlage nach einem der Ansprüche 1 bis 4, dadurch gekennzeichnet, daß die Gehäuse (7) der einzelnen Behandlungsräume (8), bis auf gegebenenfalls vorhandene Zwischenräume (66) für Stationen (36), einander eng benachbart sind.

## Claims

1. Installation for the treatment of bakery goods having a baking oven (9) forming at least one treatment area (8) for the bakery goods and having a heat-insulated baking area, through which at least a first conveying device (13) transports supports (4) vertically upwards, the supports carrying the bakery goods and lying on top of one another in a stack (15), where the supports (4) in the baking area are delivered one after the other by means of a delivery device (20) to at least a second conveying device (14), which transports the supports (4) lying on top of one another in the stack (16) in the baking area downwards again, with each conveying device (13, 14) having a lifting and lowering device acting on the respective stack (15, 16) and effecting a gradual upward and downward movement of the supports (4), with which lifting and lowering device fixing parts are associated which hold the stack (15,16) during part of this movement, and with there being provided underneath the stack (15,16) a horizontal conveyor (1) moveable in both directions, on to which the bakery goods carried by the supports can be placed at a station arranged outside the treatment area (8) or can be removed from the conveyor (1), and with which conveyor (1) the supports (4) can be brought into and taken out of the baking oven (9) through two openings (33,34) arranged on opposite walls of the baking oven (9), characterized in that there is present at least one further treatment area (8) for the bakery goods connecting to the baking oven (9) and enclosed by a separate heat-insulated housing (7) and differing from the treatment area (8) of the baking oven (9), for example, at least one fermentation cabinet (10,11) and/or at least one cooling tower (12) and/or at least one baking oven (9), perhaps with different baking atmosphere, with all treatment areas (8) being provided with similar conveying devices (13 and 14) moving the supports (4) in stacks (15,16) upwards and downwards, in that the conveyor (1) is common for all treatment areas (8) and extends underneath the row of all treatment areas (8), and in that a programmable control (27) for the transportation of the supports (4) on this conveyor (1) to the respectively desired treatment area (8) is present.

2. Installation according to claim 1, characterized in that the conveyor (1) extends beyond the respectively first and last treatment area (8) with there being extensions (68) to the conveyor at the ends of the chain of treatment areas (8).

3. Installation according to claim 1 or 2, characterized in that at least one station (36) for the application and removal of the bakery goods and/or for the treatment of the same is arranged between individual treatment areas (8) and/or in the region of the extensions (68) above the conveyor (1).

4. Installation according to claim 1, 2 or 3, characterized in that the supports (4) are formed by boxes and in that a device is present at at least one station (36) for the attachment and removal of covers (5) associated with the boxes.

5. Installation according to one of claims 1 to 4, characterized in that the housings (7) of the individual treatment areas (8), apart from potential intermediate spaces (66) for stations (36), are closely adjacent to one another.

## Revendications

1. Installation pour le traitement de produits de boulangerie comprenant un four de cuisson (9) qui constitue au moins une chambre de traitement (8) destinée aux produits de boulangerie et qui comprend une chambre de cuisson thermiquement isolée à travers laquelle au moins un premier dispositif convoyeur (13) transporte verticalement vers le haut des supports (4) superposés en une pile (15) et portant les produits de boulangerie, installation dans laquelle, dans la chambre de cuisson, les supports (4) sont transmis les uns après les autres par un dispositif de transfert (20) à au moins un deuxième dispositif convoyeur (14) qui transporte à nouveau vers le bas dans la chambre de cuisson les supports (4) superposés dans la pile (16), cependant que chaque dispositif convoyeur (13, 14) comporte un dispositif de montée et de descente, respectivement, qui agit sur la pile correspondante (15, 16), qui produit un déplacement pas à pas des supports (4) vers le haut et vers le bas, respectivement, et auquel sont associés des organes de fixation qui maintiennent les piles (15, 16) pendant une partie de ce déplacement, et cependant qu'il est prévu, au-dessous des piles (15, 16), un convoyeur horizontal (1) qui peut être déplacé dans les deux directions et sur lequel les produits de boulangerie portés par les supports peuvent être déposés dans un poste disposé à l'extérieur de la chambre de traitement (8) où, respectivement, ils peuvent être enlevés du convoyeur (1), les supports (4) pouvant être introduits dans le four de cuisson (9) ou extraits de celui-ci, respectivement, au moyen dudit convoyeur (1) à travers deux ouvertures (33, 34) ménagées dans des parois opposées entre elles du four de cuisson (9), caractérisée par le fait qu'est présente, à côté du four de cuisson (9), au moins une autre chambre de traitement (8) destinée aux produits de boulangerie qui est différente de la chambre de traitement (8) du four de cuisson (9), qui est entourée par une enceinte séparée (7) thermiquement isolée et qui est par exemple au moins une armoire de fermentation (10, 11) et/ ou au moins une tour de refroidissement (12) et/ou au moins un four de cuisson (9), le cas échéant avec une atmosphère de cuisson différente, cependant que toutes les chambres de traitement (8) sont munies de dispositifs convoyeurs du même genre (13, respectivement 14) qui déplacent vers le haut et vers le bas, respectivement, les supports (4) disposés en piles (15, 16), par le fait que le convoyeur (1) est commun à toutes les chambres de traitement (8) et qu'il s'étend au-dessous de la rangée formée par toutes les chambres de traitement (8), et par le fait qu'une commande programmable (27) est présente pour le transport des supports (4) sur ce convoyeur (1) jusqu'à la chambre de traitement (8) qui est souhaitée à chaque fois.

2. Installation selon la revendication 1, caractérisée par le fait que le convoyeur (1) s'étend au-delà des chambres de traitement (8) qui sont à chaque fois la première et la dernière par des prolongements (68) présents aux extrémités de la chaîne des chambres de traitement (8).

3. Installation selon la revendication 1 ou 2, caractérisée par le fait qu'au moins un poste (36) destiné à la pose ou, respectivement, à l'enlèvement des produits de boulangerie et/ou au traitement de ceux-ci est disposé au-dessus du convoyeur (1) entre certaines des chambres de traitement (8) et/ou dans la région des prolongements (68).

4. Installation selon la revendication 1, 2 ou 3, caractérisée par le fait que les supports (4) sont constitués par des moules, et par le fait qu'un dispositif destiné à poser des couvercles (5) associés aux moules ou à les enlever, respectivement, est présent sur au moins un poste (36).

5. Installation selon l'une des revendications 1 à 4, caractérisée par le fait que les enceintes (7) des diverses chambres de traitement (8) sont au proche voisinage les unes des autres, à l'exception d'espaces intermédiaires (66) qui sont présents le cas échéant pour des postes (36).
